# EUROPEAN PATENT SPECIFICATION

(11) **EP 0 616 175 B1**
(45) Date of publication and mention of the grant of the patent: **27.08.1997**
(21) Application number: 94103995.0
(22) Date of filing: 15.03.1994
(51) Int. Cl.: F24F 3/16

(54) **Environment decontaminating system having air cleaning and deodorizing function**
Einrichtung zur Dekontamination der Umgebung durch die Reinigung und Desodorierung von Luft
Système de décontamination de l'environnement par la purification et la désodorisation de l'air

(30) Priority: 15.03.1993 JP 78543/93
(43) Date of publication of application: 21.09.1994
(73) Proprietor: YUSHIN ENGINEERING KABUSHIKI KAISHA, Kyoto-shi, Kyoto-fu (JP); KABUSHIKI KAISHA MARUZEN CREATE, Chuo-ku, Tokyo-to (JP)
(72) Inventor: Hiromi, Tsutomu, Otsu-shi, Shiga-ken (JP)
(74) Representative: Zipse + Habersack

(56) References cited:
- DE-A- 2 920 813
- US-A- 4 343 765

## Description

### BACKGROUND OF THE INVENTION

### (Technical Field)

The present invention relates to an environment decontaminating system having air cleaning and deodorizing functions used to eliminate air pullution generated within housing facilities of human society utilizing functions such as dust collection, deodorization, acid gas adsorption and air sterilization.

More specifically, the invention relates to such environment decontaminating system used for various indoor environments hedged off from outside air in office building, domestic room, restaurant, teahouse, vehicle, ship, clubhouse, karaoke-house, barber shop, beauty salon, sickroom and cookroom to achieve desired functions such as dust collection, deodorization, air sterilization and acid gas adsorption and thereby to realize artificially air decontaminating effect as well as forest bathing effect both of which should be naturally provided under the effect of negative ions.

### (Prior Art)

There have already been proposed various techniques for cleaning of indoor air, for example, the technique (1) in which a dust collecting function by AC or DC boosting is combined with a filter and absorbent such as activated charcoal or physical absorbent to achieve adsorption of offensive odor; the technique (2) in which cigarette smoke or the like is caught by paper filter under Coulomb effect provided by DC boosting, on one hand, and a very small amount of ozone is generated in order to decompose the offensive odor under masking effect of ozone, on the other hand; and the technique (3) in which dust collector utilizing DC boosting, easily cleanable filter, ozone concentration sensor, ozone generator, ozone deodorizing catalyst, acid gas absorbent and a scavenging fan are serially combined in this order within one and the same wind tunnel to achieve a desired air cleaning. (Japanese Patent Application No. 1991-289318 and Japanese Utility Model Application No. 1992-38674). Further another technique is well known which is based on the chemical deodorization utilizing a combination of ozone generator, deodorizing catalyst and acid gas absorbent (Japanese patent application Disclosure No. 1991-143524), but the technique based on the chemical deodorization utilizing ozone often endangers a safety because this technique fails to consider a problem of secular change.

Specifically, the above-mentioned technique (1) of well known art is disadvantageous in that, once the activated charcoal or physical absorbent has been saturated with offensive odor absorbed therein, this odor is emitted again and a vicious circle of odor is caused.

The technique (2) of well known art relies upon the paper filter functioning to collect contaminants under the DC boosting Coulomb effect without use of a scavenging fan. This technique (2) lacks an appropriate consideration of security against residual ozone, namely, a relatively high value of residual negative ions darkens wall surface of a room, deflective ionization adversely affects the human health and an ozone concentration within the room increases at low temperature and low humidity.

The technique (3) certainly solves the problem of said technique (2), but the ozone concentration sensor often erroneously operates in response to miscellaneous gases, particularly cigarette smoke, on one hand, and secular change of catalyst or the like makes it impossible to maintain a concentration of ozone exhausted from the system at a level less than 0.06 ppm, on the other hand.

Overpopulation and deteriration of office buildings as well as apartments cause the indoor spaces inclusive of the living environment for human activities to be hedged off from outside air for a longer period and promotes the air pollution due to fungus, residual odor or infectious microorganisms including bacteria. The outside air is also contaminated with NOx and SOx due to exhaust fumes of cars and factories, Seasonally, such air pulution is added not only with offensive odor but also with pollinosis.

The domestic room for daily life also suffers from biological odors due to particles of cigarette smoke, fungus, pet's body smell and wandering cockroach.

Furthermore, US-A-4 343765 discloses an apparatus for deodorizing and disinfecting air comprising in a duct an ozone generator, filters and an ozone detector.

### SUMMARY OF THE INVENTION

In view of the problems as above mentioned, it is an object of the invention to provide means to reproduce cleaned air which should be provided by the nature covered with rich green by artificially utilizing dust collection, air sterilization, forest bathing effect, deodorization and acid gas adsorption with safety as well as stability, and thereby to maintain a desired indoor air quality.

The object set forth above is achieved, in accordacne with the invention, by an environment decontaminating system having the features of claim 1.

The environment decontaminating system having air cleaning and deodorizing functions constructed according to the invention employs, as a power source for DC high voltage dust collecting function, a power source having DC 12 V input and boosted up to 6.0 KV with electric current lower than 70 mA. DC high voltage section and a grounded electrode section must be protected against a wind resistance and the grounded electrode is formed by wire net or carbon fiber. There is provided a dust catching filter closely adjacent to or above or below the grounded electrode, more specifically, at a distance less than 20 mm from said grounded electrode.

An airflow must be less than 1.0 m/sec and a catching percentage of the dust ccatching filter must be 50% or higher.

With such settings, when a person smokes a cigarette in a room smaller than 17 m², the number of negative ions continues to be 5,000/cc during initial 20 minutes and thereafter is stabilized down to a value of 260/cc as a load of smoke and dusts decreases. Such stabilized value is comparable to the value of negative ions usually observed in suburbs covered with rich green.

This stabilized number of negative ions will be maintained unless the value of contaminant load in the room increases again.

It is well known that ozone decomposes a double bond which is the prime mover of offensive odor and is most effective for deodorization. A honeycomb of manganese-containing catalyst for oxidation may be provided along with the ozone generator to promote the deodorising reaction and to decompose any excessive ozone (Japanese Patent Application No. 1989-115352).

Generation of ozone is performed utilizing a creeping discharger including a fine ceramics dielectric layer less than 130 micrometer thick so as to generate ozone at a concentration lower than 1.0 ppm (normal temperature of 20° C, normal humidity of 60% RH)(Japanese Patent Publication No. 1980-37483). In view of a fact that a concentration of ozone generation depends on temperature and humidity and the fine ceramics themselves are hygroscopic, there is provided a heating element having a heating value higher than the normal temperature by 20°C to 30°C (Japanese Patent Application No. 1989-33004) so as to protect the discharger against destruction due to a high humidity and thereby to facilitate generation of ozone even in a humid environment although an ozone generating efficiency and, therefore, a gas phase ozone concentration are inevitably reduced at such high humidity.

At relatively low temperature and humidity, the gas phase ozone concentration increases by one and half times compared to that at said normal temperature of 20°C and said noemL humidity of 60% RH, so the manganese-containing catalyst will be deteriorated in the absence of the odor.

According to the invention, the indoor environment to be provided with the decontaminating system is roughly classified into the indoor environment requiring decomposition of odor above all and the other indoor environment so that operation of the ozone generator may be easily controlled depending on this classification.

Generally, microorganisms including fungus and bacteria are activated at a temperature range of 10°C to 40°C and no significant increase of odor is observed at a temperature lower than 10°C.

Accordingly, in the environment which is to be decontaminated with a priority of decomposition of odor but at a temperature lower than 10°C, a threshold value of the ozone generator comprising fine ceramics is preset so that its excitation level depends on the environment temperature and discharge may be slowed down at a low temperature and a low humidity (See TABLE 1).

Such countermeasure has been found to be effective to prevent the manganese-containing catalyst (MnO₃) from being deteriorated due to oxidation of ozone rich gas and to eliminate an excessively high concentration of residual ozone after passage through the catalyst, which otherwise might adversely affect human body.

Ozone ranks next to fluorine in its oxidation capacity. Therefore, direct use of gas phase ozone for chemical deodorization is dangerous, since nitrogen monoxide (NO) and sulfur monoxidee (SO) contained in heating equipment combustion gas generated in a living environment or automobile exhaust gas intruding from the outside air might be further oxidized by ozone to NO₂ and SO₂, respectively, which may injure human health.

To achieve security of air cleaning for the living environment, the acid gas must be removed by adsorption before scavenging (See TABLE 2).

According to the invention comprising a combination of dust collection by negative ions, deodorization by ozone and acid gas adsorption, such combination is provided in front of the suction scavenging fan and the ozone concentration sensor is provided immediately behind the outlet scavenging fan.

With such arrangement, both the particles of cigarette smoke or the like and tar contained therein are effectively removed and, in addition, the chemical deodorization and the acid gas adsorption serve as a protective filter for the ozone concentration sensor to avoid an erroenous operation of the ozone concentration sensor due to miscellaneous gases. It should be understood that, while the dust collecting function utilizing negative ions is not subject to secular change, ozone, ozone deodorizing catalyst and acid gas absorbent can not be free from their secular changes.

The indoor environment seasonally varies as a load of contaminants and odors which, in turn largely depend upon temperature and humidity.

The ozone concentration sensor serves to monitor and control the ozone concentration at the outlet of the system so as to be always lower than 0.06 ppm and thereby to compensate any secular change possibly occurring in the desired function of the decontaminating system.

In this manner, in addition of the advantage as described in Claim 4, the system of the invention can be adapted to a particular environmental consition to improve a reliability of the ozone exhaust standard.

### BRIEF DESCRIPTION OF THE DRAWINGS

The invention will be described more in details with reference to the accompanying drawings, in which:

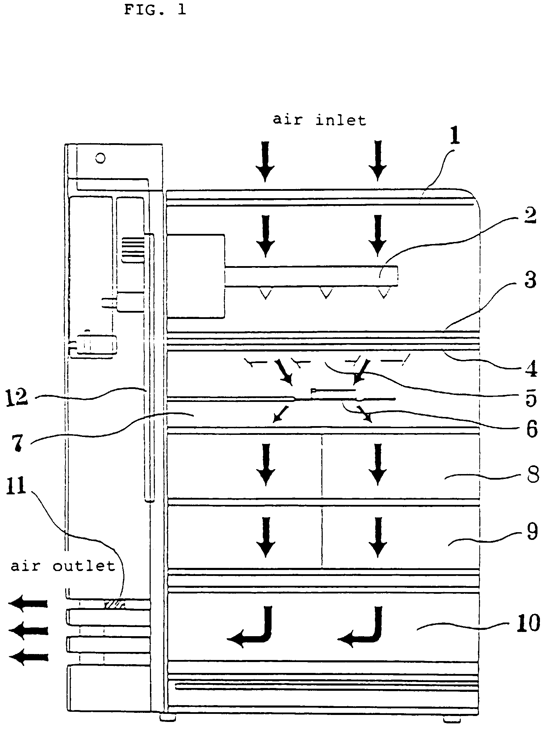

Fig. 1 is a schematic diagram illustrating an embodiment of the decontaminating system having air cleaning and deodorizing functions constructed according to the invention.

### DESCRIPTION OF THE PREFERRED EMBODIMENT

Referring to Fig. 1, an embodiment of the decontaminating system having air cleaning and deodorizing functions is schematically illustrated. A wide-meshed screen 1 serves to remove visually recognizable dusts floating in air. Reference numeral 2 designates an ionic dust collecting electrode, reference numeral 3 designates a fibrous filter, and reference numeral 4 designates a DC anode section so that cigarette smoke or the like floating in the air is charged by DC high voltage ionic effect and caught by the fibrous filter 3 which can be easily washed and reused. Reference numeral 5 designates a gas phase ozone/odor reaction mechanism and reference numeral 6 designates an ozone generator provided with a diffusing plate adapted to homogenize reaction of deodorization and sterilization occurring in contact with catalyst.

Reference numeral 7 designates a space for deodorization and sterilization. The homogenized mixture ozone odor mixture is completely deodorized in contact with the ozone deodorizing catalyst and an excessive concentration of ozone is eliminated. It should be noted here that the ozone deodorizing catalyst always participates in repeated oxidization and reduction and therefore the ozone generation presents a cycle of, for example, ON for 5 minutes and OFF for 5 minutes with the scavenging fan being continuously operated.

Reference numeral 9 designates an acid gas absorbent used for adsorption of acid gases such as NO₂ and SO₂ generated by oxidizing effect of ozone and contributing to decomposition of the excessive ozone. Both the ozone deodorizing catalyst 8 and the acid gas absorbent 9 are provided in the form of honeycombs of which a SV value is adjusted so that a total volume value of the ozone deodorizing catalyst 8 and the acid gas absorbent 9 be in a range from 30,000 to 100,000^{-h}.

Reference numeral 10 designates a scavenging fan preferably comprising a brushless fan of high static pressure which structurally meets with sufficient wind resistance to assure a desired airflow.

Reference numeral 11 designates an ozone concentration sensor provided immediately behind the outlet used to detect a concentration of ozone which has been cleaned by said components 1 through 9 functioning as the sensor filters to eliminate the erroneous operation of the sensor due to the cigarette smoke or the like. To avoid deterioration of the ozone cleaning effect by the ozone deodorizing catalyst and the acid gas absorbent due to their secular changes, the ozone gas phase concentration at the outlet of scavenging is continuously monitored and, if the concentration exceeds the level of 0.06 ppm, a control unit 12 is activated to intermit a period of ozone generation.

TABLE 1 shows a result of the dust collecting function as illustrated by Fig. 1 utilizing the DC high Coulomb effect and a state of the decontaminated indoor environment. TABLE 2 indicates the number of nagative ions in the room well stabilized down to the number of negative ions usually obserbed in suburbs covered with rich green.

As will be apparent from this TABLE, the number of negative ions never increases and is stabilized to 260/cc usually observed in suburbs covered with rich green so long as no significant contaminant load is generated again in the room.

However, the number of negative ions is abruptly increased by particles of cigarette smoke or the like and a significant function of dust collection is initiated, as will be appreciated from the time required for removal of such particles shown by TABLE 1. It will be also apparent from TABLE 1 that a value of drive current is automatically controlled within a range from 30 mA to 70 mA in response to variation of the contaminant load.

Generation of ozone is apt to be affected by temperature and humidity. TABLE 3 indicates such variation in generation of ozone.

TABLE 3 indicates a variation in generation of ozone as a function of temperature and humidity when electric current of 70 mA is applied to the ozone generator and the scavenging fun supplies an airflow of 330 l/min. As seen in TABLE, the gas phase ozone centration of 0.43 ppm at 20°C, 60% Rh increases by 46% up to 0.63 ppm at the same temperature and a humidity of 40% RH.

While the environment decontaminating system having air cleaning and deodorizing functions of the invention is initially arranged so that the ozone gas phase concentration of approximately 0.3 ppm is available for deodorization, generation of ozone is seasonally varied, for example, the ozone gas phase concentration of 0.3 ppm initially set at a normal temperature of 20°C is increased by 50% up to 0.45 ppm at 5°C.

At the normal temperature (18°C to 25°C), the presence of biological odors is also presumed and the ozone deodorization can be smoothly performed.

It is also possible at the normal temperature to maintain the concentration of ozone at the outlet of the system at a level lower than 0.06 ppm. However, a reactivity of oxidization/reduction taking place in contact with manganese dioxide containing catalyst (MnO₃) is slowed down as the gas phase ozone concentration increases at a temperature lower than 10°c and a relatively low humidity.

TABLE 4 indicates the ozone concentration as measured at the outlet of the system at 20°C, 60% RH after generation of ozone has been repeatedly turned ON for 3.5 minutes and turned OFF for the same period and the deodorizing catalyst as well as the acid gas absorbent have been loaded.

TABLE 4 assumes that the gas phase ozone concentration is adjusted to 0.3 ppm (at 20°C, 60% RH) relative to a given scavenged airflow and SV value of the combined deodorizing catalyst and acid gas absorbent is adjusted to 50,000^{-h}. As indicated, a decontaminating capacity is initially as high as 96%, but decreases down to 91% after passage of 17 hours in a state that there is none of factors to be decomposed, for example, odor. TABLE 4 indicates a variation in the gas phase ozone concentration under the aging effect at the normal temperature and humidity and suggests that this gas phase ozone concentration does not reach 0.06 ppm.

However, in the environment as indicated by TABLE 3 in which a relatively low temperature and a relatively low humidity last, 0.06 ppm will be not exceeded if the decontaminating capacity of the catalyst decreases and no deodorizing reaction takes place.

TABLE 5 indicates an improvement of ozone generating characteristics as indicated by TABLE 3.

Specifically, TABLE 5 indicates a temperature-dependent variation of the gas phase ozone concentration at a relatively low humidity.

Generation of ozone remarkably decreases at a temperature lower than 10°C. This suggests that the generation of ozone increases at a temperature range in which biological odors are generated.

TABLE 5 indicates also that the ozone concentration at the outlet of the system can be maintained at a level lower than 0.06 ppm without deteriorating of the catalytic efficiency at low temperature and low humidity.

TABLE 6 indicates the effect of miscellaneous gases on the ozone sensor.

TABLE 6 indicates a change in the output of the ozone sensor in the form of the gas phase ozone concentration appearing when the cigarette smoke is blown directly to the ozone sensor. As will be apparent from TABLE 6, improper placement of the ozone concentration sensor always causes an erroneous operation of the sensor. Thus, when it is desired to employ the ozone sensor to monitor the ozone concentration at the outlet of the system, all the functions for air cleaning such as dust collecting, ozone chemical deodorization and acid gas adsorption may be used as the ozone sensor protecting filter to avoid said erroneous operation.

TABLE 7 indicates data obtained by providing the ozone concentration sensor at the outlet of the system.
(A) indicates data obtained with the gas phase ozone concentration of 0.145 ppm and the scavenged airflow of 330 l/min.
(B) indicates that the gas phase ozone concentration generated under the condition of (A) is controlled by the ozone sensor. Namely, Detecting a concentration of 0.035 ppm, the ozone sensor controls generation of ozone by turning ON for 3 minutes and 10 seconds and turning OFF for the same period.
(C) indicates a case in which only the ozone deodorizing catalyst (MnO₃) which have already been used in a harsh test is loaded in the system and ozone leak is controlled by the ozone sensor. The level of 0.06 ppm is never exceeded.
(D) indicates data obtained by environment-dependent aging the same condition. (E) indicates that generation of ozone is slowed down at a temperature lower than 10°C and the ozone concentration at the outlet of the system never exceeds the level of 0.06 ppm.

TABLE 8 indicates the gas phase ozone concentration in comparison to the result of competitive manufacturers' products and data on the acid gas adsorption.

TABLE 9 indicates a scheme of odored ingredient decomposition by the ozone deodorizing catalyst and ozone.

TABLE 10 is a list showing result of the deodorization test.

Deodorizing effect for biological odors was verified by the result as has been reported.

As will be understood from the foregoing description, the present invention provides an environment decontaminating system having air cleaning and deodorizing functions allowing cleaned air which should be provided by the nature covered with rich green to be reproduced within an indoor space by utilizing dust collection, air sterilization, forest bathing effect, deodorization and acid gas adsorption with safety as well as stability and without any erroneous operation pf the sustem.

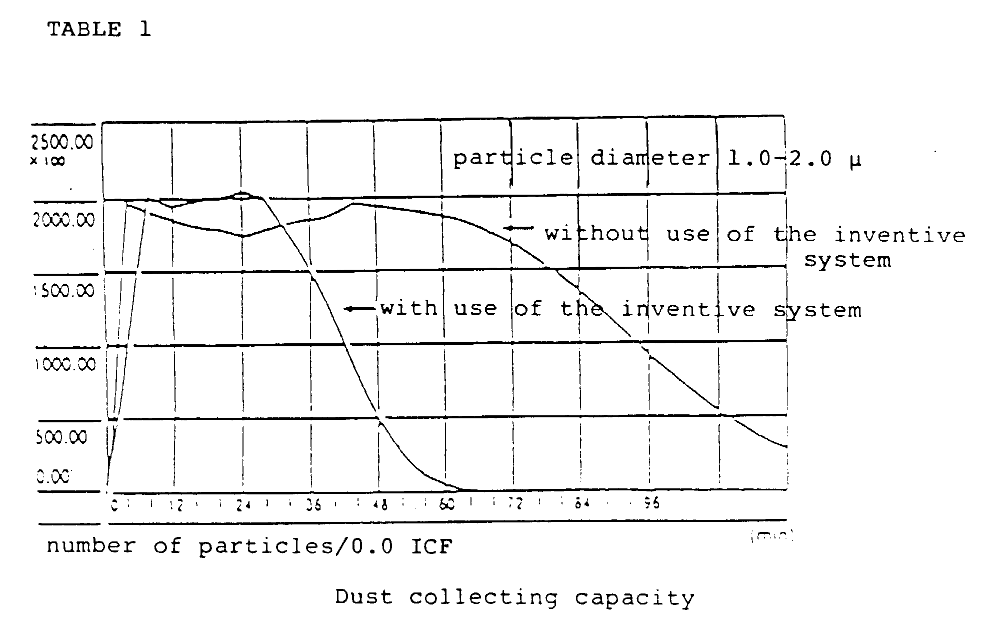

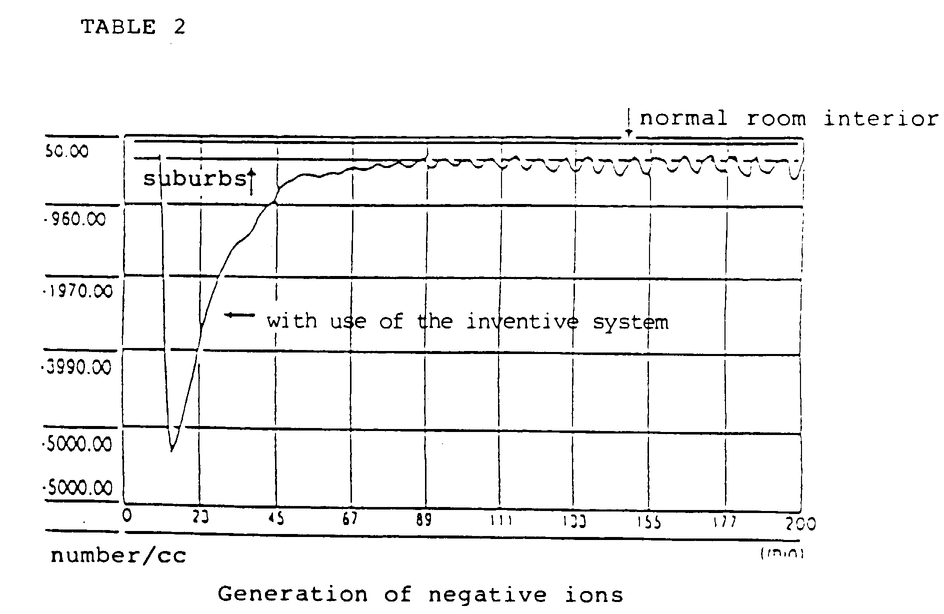

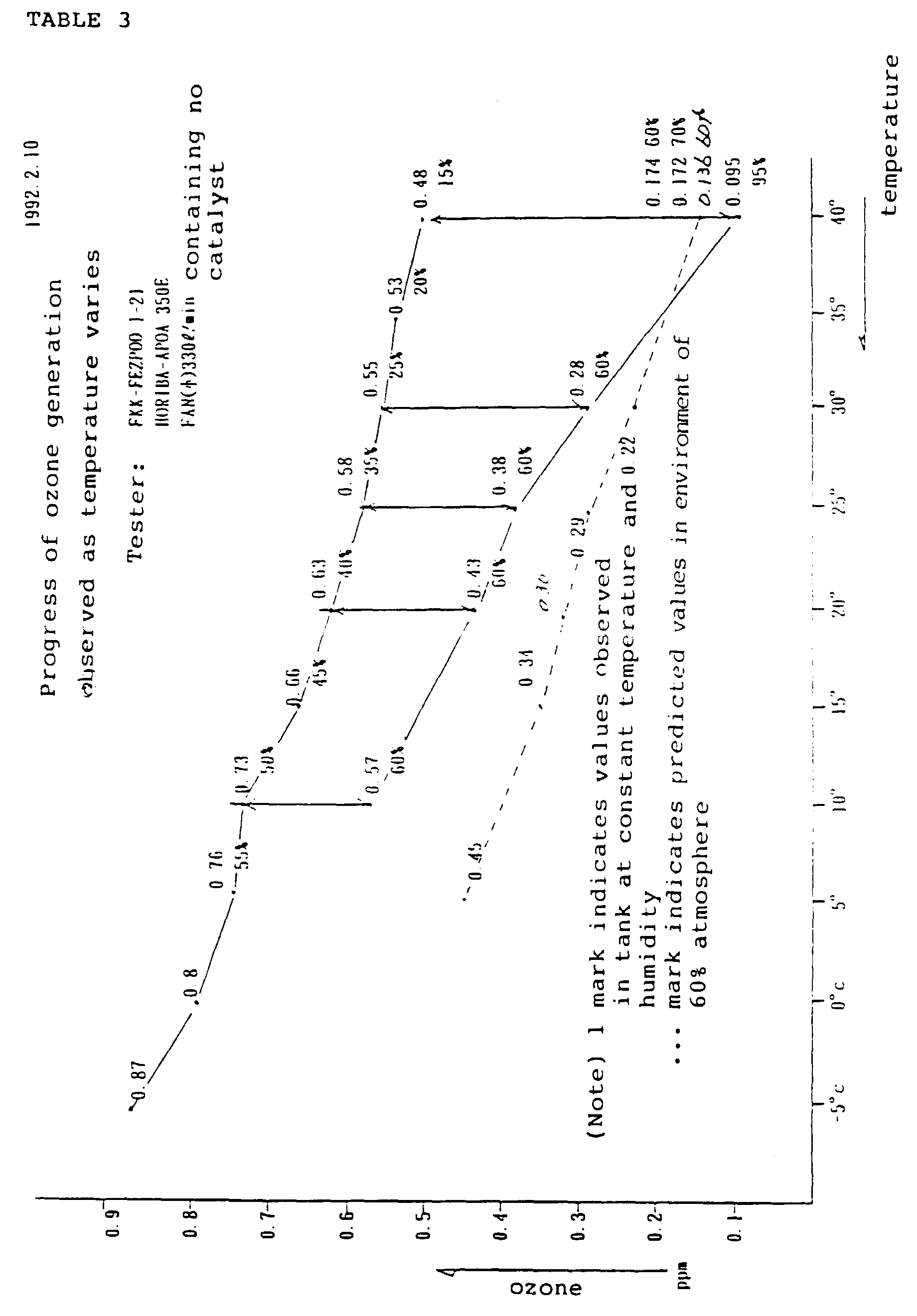

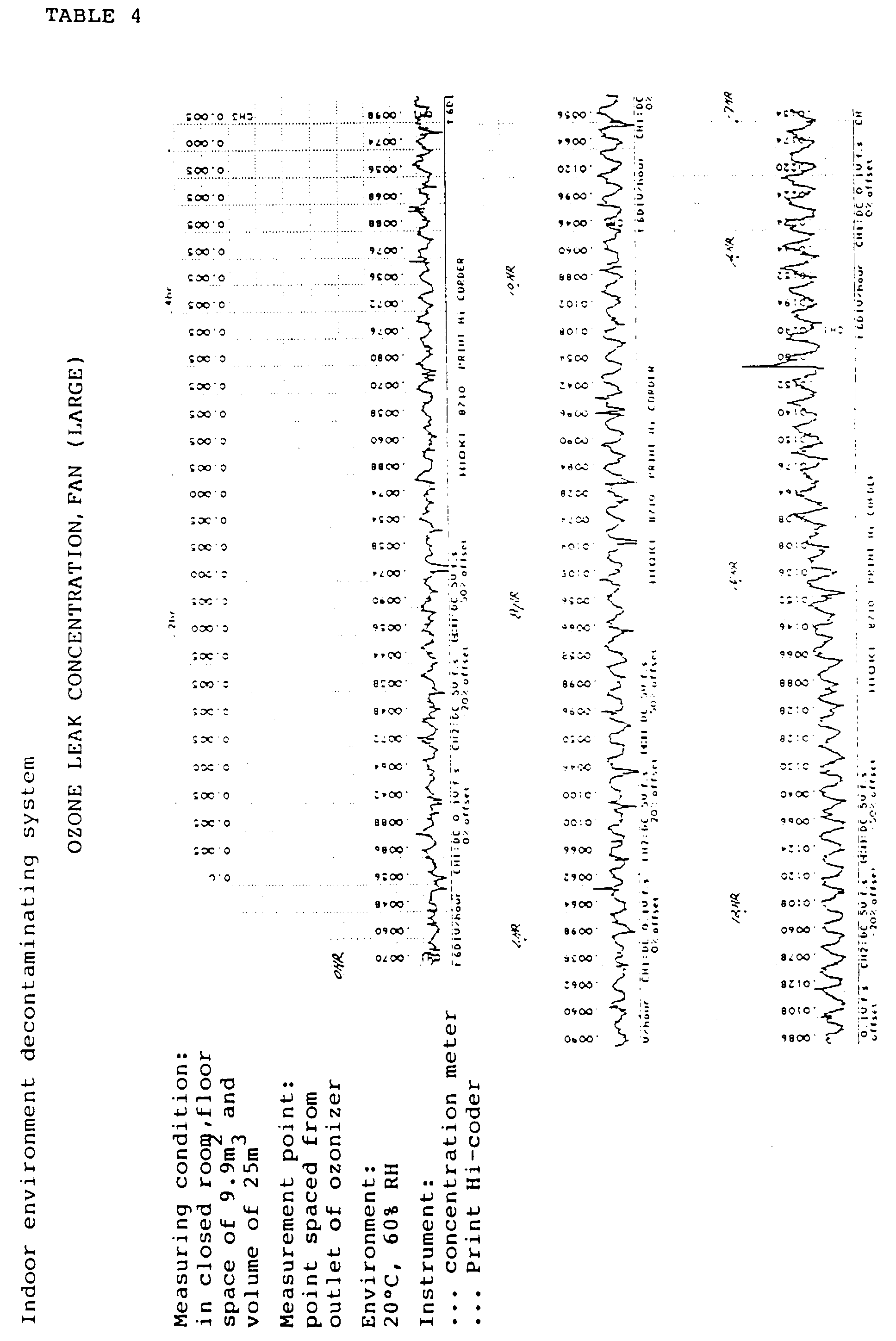

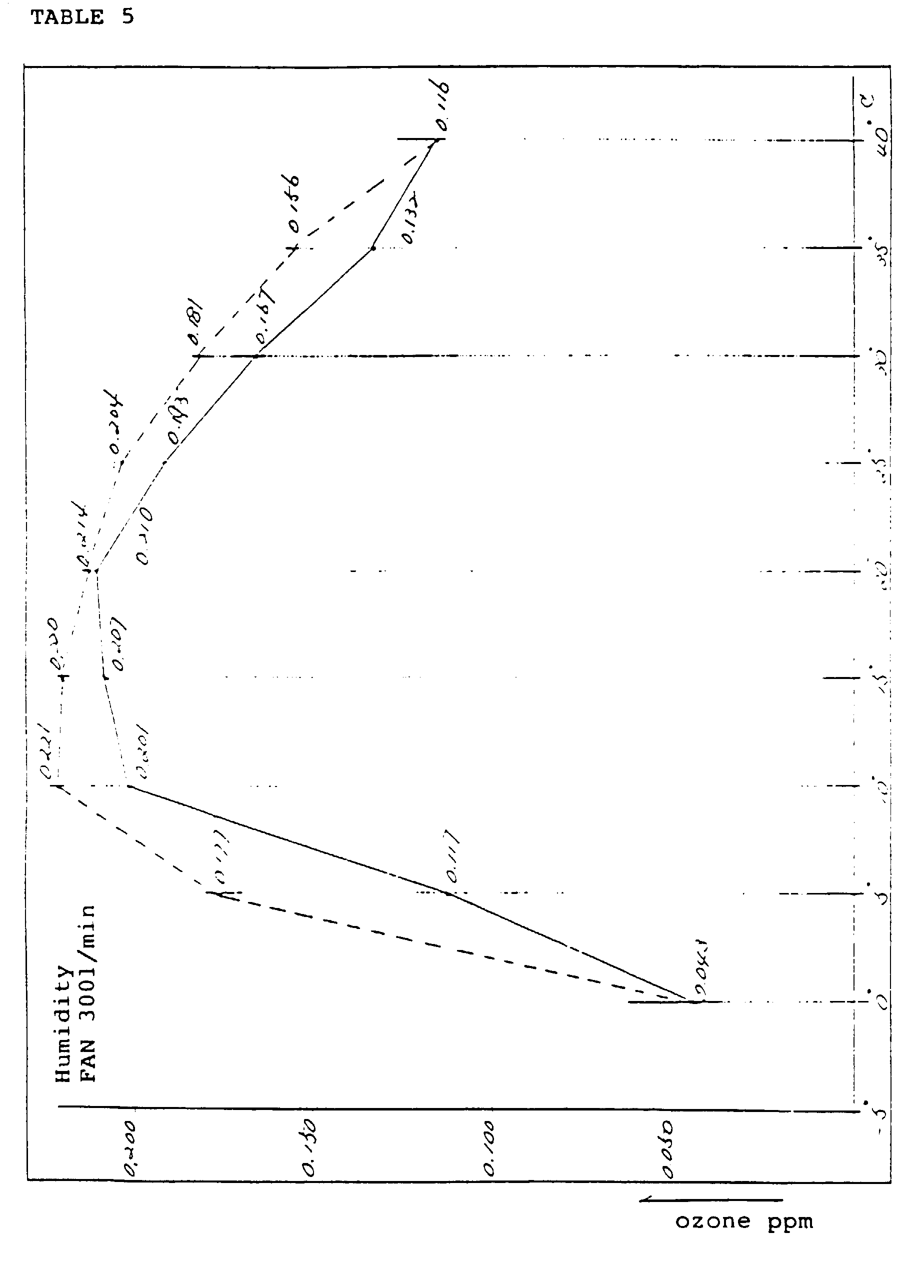

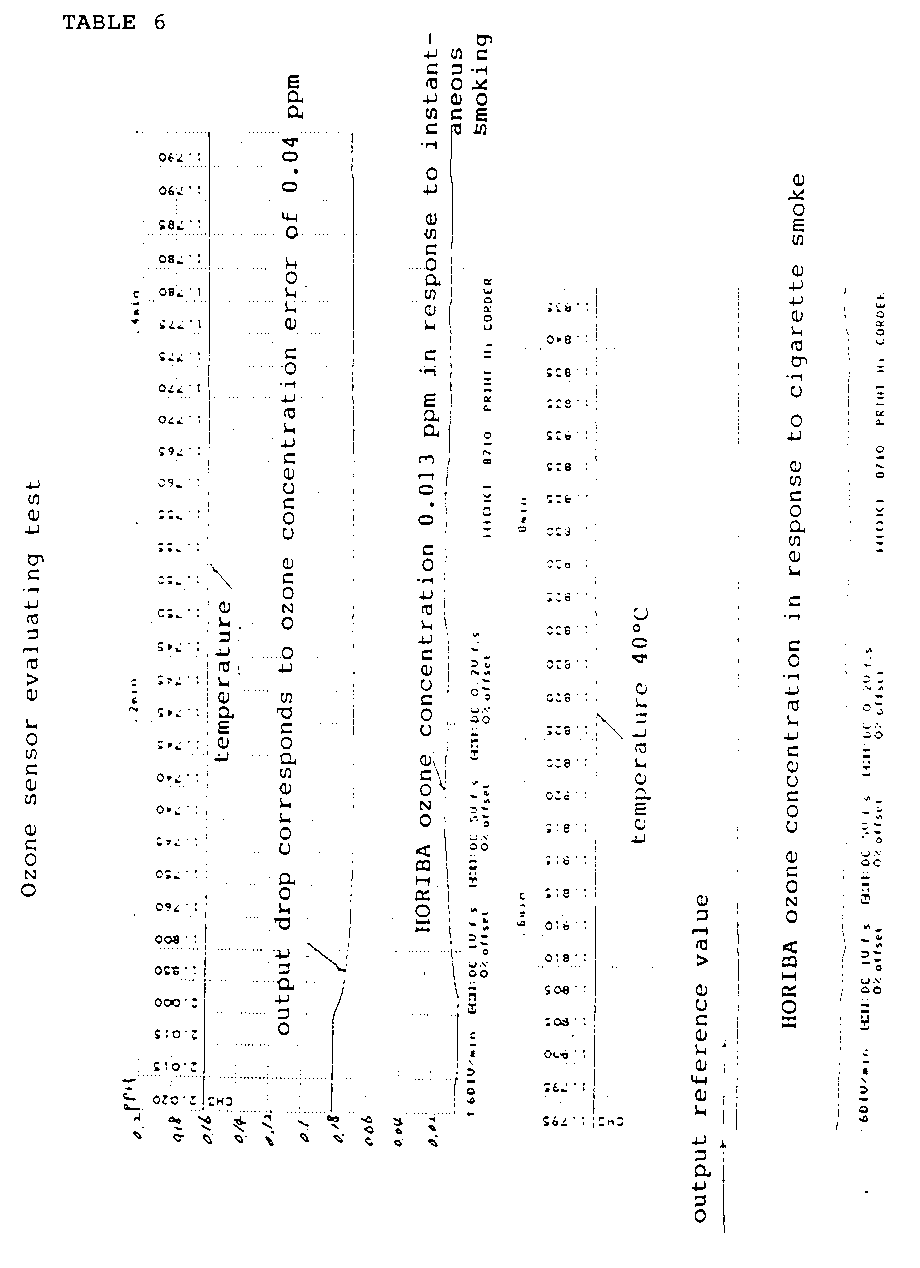

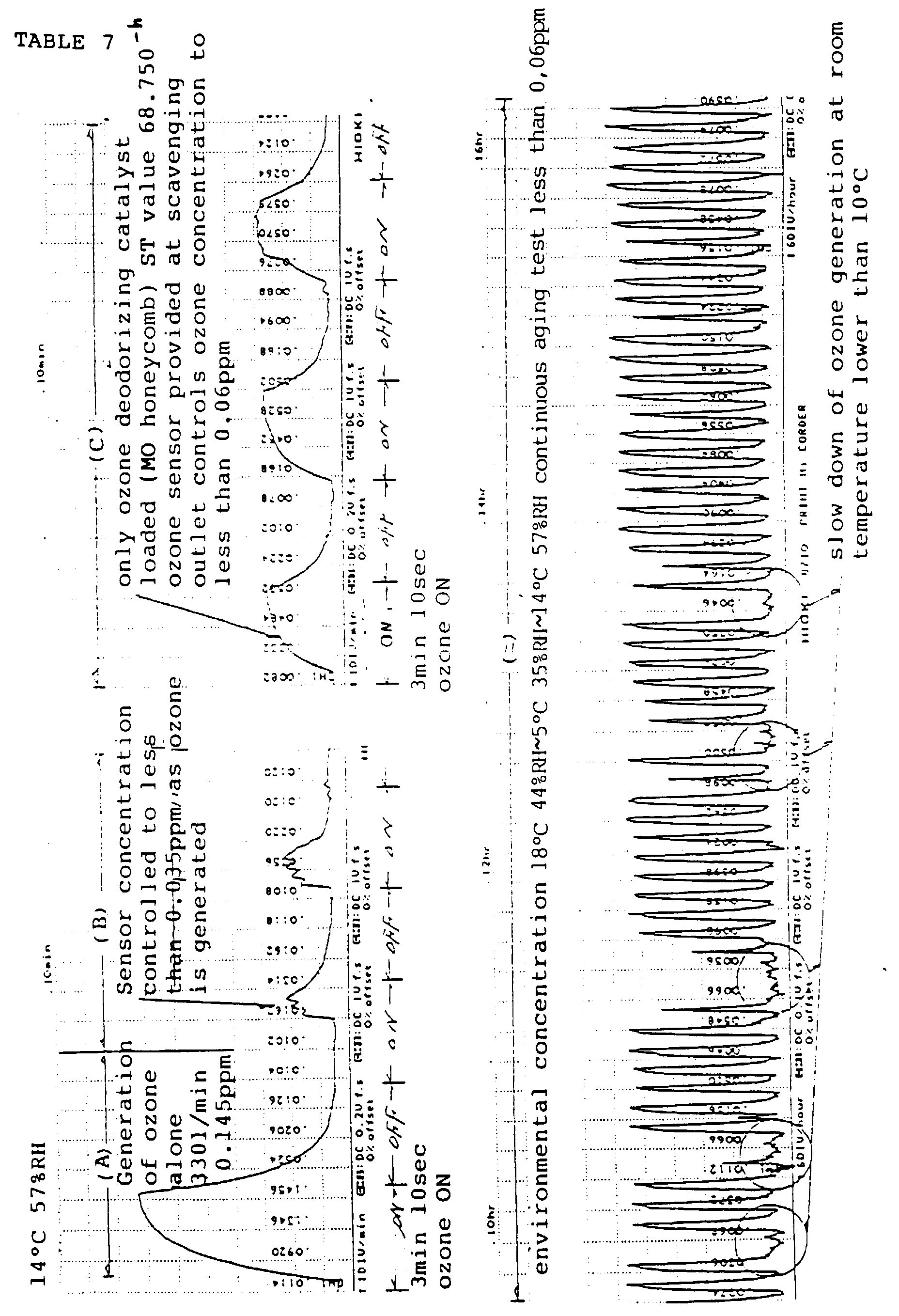

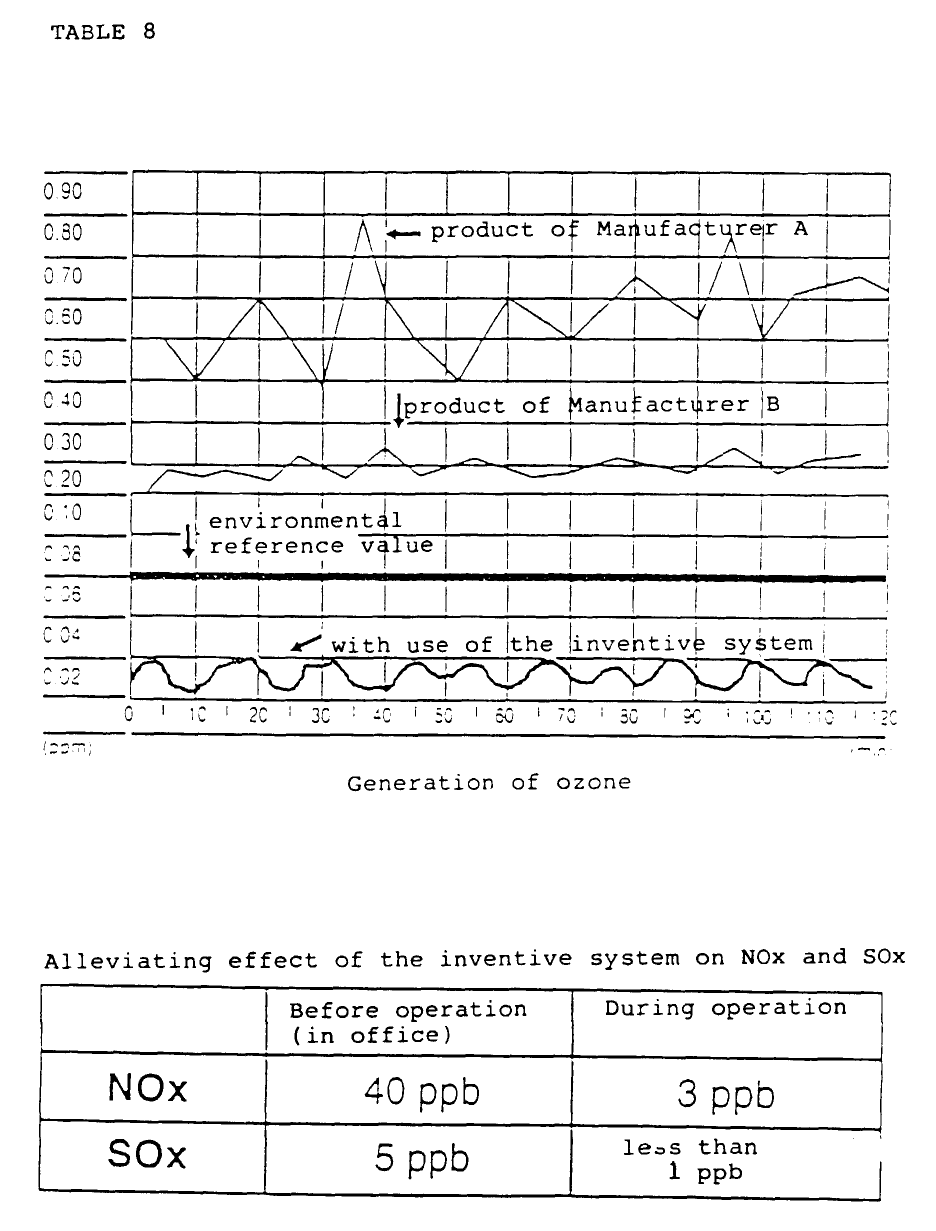

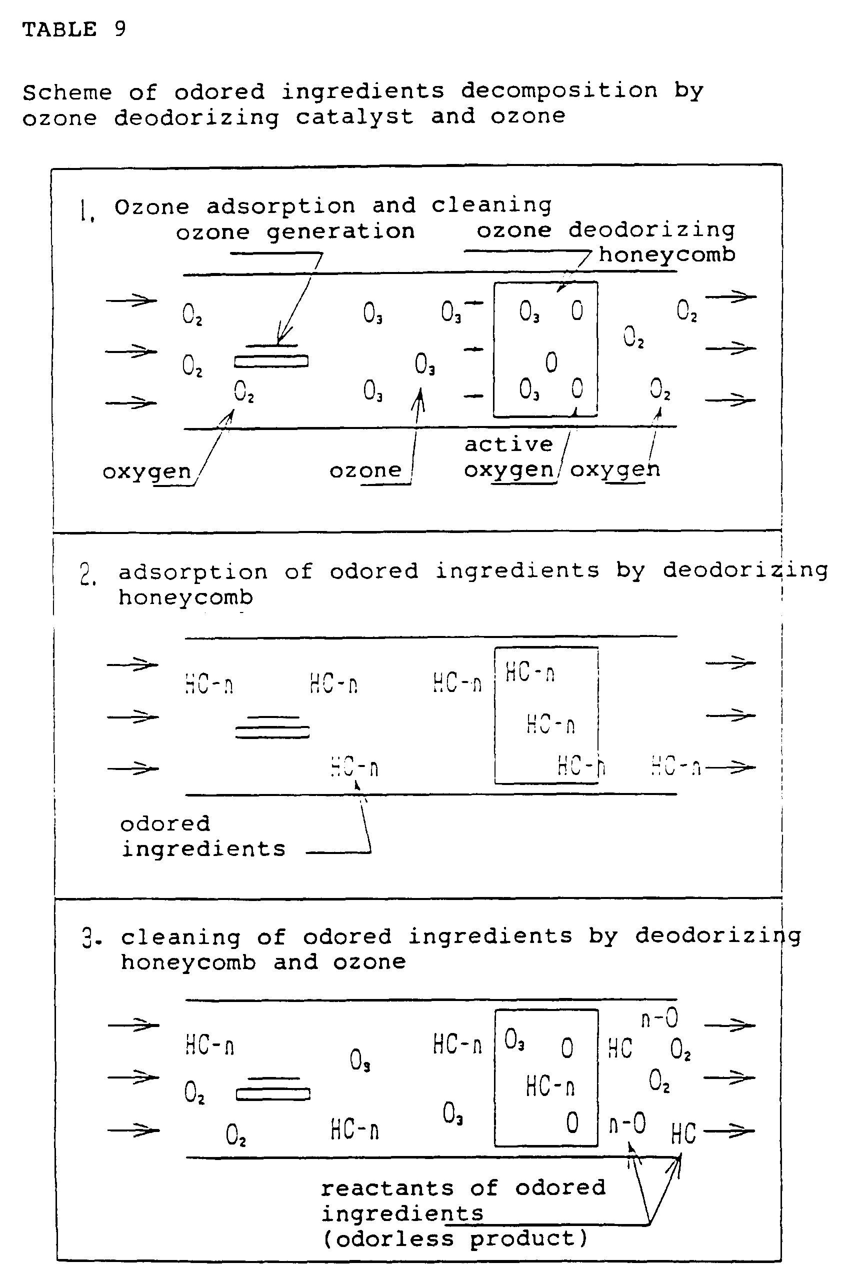

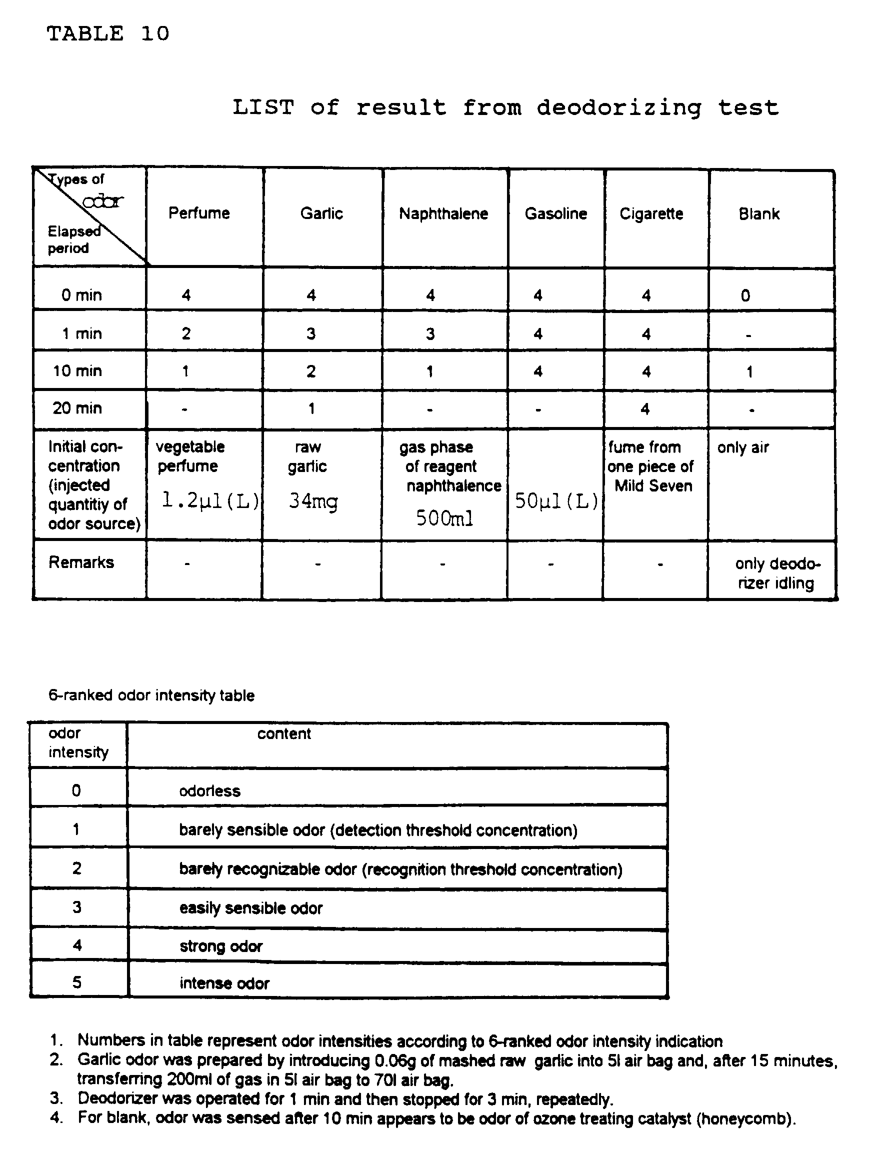

## Claims

1. An environment decontaminating system having air cleaning and deodorizing functions comprising:
a housing having an air inlet and an air outlet, said housing enclosing therein:
a high voltage DC dust collector having the Coulomb effect,
an ozone generator having a dielectric layer formed by a fine ceramic,
an ozone deodorizing catalyst,
an acid gas absorbent, and
a suction scavenging fan,
which are arranged from the air inlet side toward the air outlet side, and
an ozone concentration sensor provided adjacent said air outlet, the gas phase concentration of ozone emitted by the scavenging fan being monitored by said ozone concentration sensor, and thereby an ozone output being controlled by means of a control unit.

2. An environment decontaminating system having air cleaning and deodorizing functions according to claim 1, wherein the concentration of ozone emission is controlled to a level lower than 0.06 ppm of the gas emission safety standard.

3. Environment decontaminating system having air cleaning and deodorizing functions according to Claim 1, wherein the system is constructed so as to be readily responsive to a variation in dust collection load for cigarette smoke or the like under high voltage DC Coulomb effect of a predetermined boosted voltage and, once decontaminated, the number of negative ions in an indoor environment is stabilized to the number of negative ions usually observed in suburbs covered with rich green.

4. Environment decontaminating system having air cleaning and deodorizing functions according to Claim 1, wherein the ozone concentration sensor is placed immediately behind the outlet of the system and controls output of ozone generation in order that an ozone exhaust concentration be maintained at a level lower than 0.06 ppm which is predetermined as a safety standard for the system exhaust even if the ozone generator , the ozone deodorizing catalyst and the acid gas absorbent are subject to secular change.

5. Environment decontaminating system having air cleaning and deodorizing functions according to Claim 1, wherein a useful life of the catalyst is prolonged by slowing down generation of ozone at a temperature range in which biological odors are not significantly activated in a living space of human being.

6. Environment decontaminating system having air cleaning and deodorizing function according to Claim 1, wherein an erroneous operation of the ozone concentration sensor due to miscellaneous gases is avoided by arranging the dust collector, the chemical deodorant and the acid gas absorbent as ozone sensor protecting filters.

## Patentansprüche

1. Umwelt-Dekontaminationssystem mit luftreinigender und deodorisierender Wirkung umfassend:
ein Gehäuse mit einem Lufteinlaß und -auslaß, welches folgende Komponenten einschließt:
einen auf Basis des Coulomb-Effektes arbeitenderGleichstrom-Hochspannungs-Staubkollektor,
ein Ozongenerator mit einer dielektrischen Schicht aus Feinkeramik,
einen deodorisierenden Katalysator
ein Säuregasabsorber und
einen Saugreinigungsventilator, welche von der Lufteinlaß- zur Luftauslaßseite hin angeordnet sind, und
einen Sensor für die Ozonkonzentration der nahe dem Luftauslaß angeordnet ist, wobei die Konzentration des Ozons in der vom Saugreinigungsventilator emittierten Gasphase von dem Sensor für die Ozonkonzentration überwacht und dabei eine Ozonabgabe mittels einer Steuereinheit gesteuert wird.

2. Umweltdekontaminationssystem mit luftreinigender und deodorisierender Wirkung gemäß Anspruch 1, wobei die Konzentzration der Ozonemission auf einen Wert kleiner als 0,06 ppm des Gasemissionssicherheitsstandards eingestellt wird.

3. Umwelt-Dekontaminationssystem mit luftreinigender und deodorisierender Wirkung gemäß Anspruch 1, wobei das System derart konstruiert ist, daß es leicht auf eine Veränderung der Staubbelastung für Zigarettenrauch oder dergleichen unter einem Hochspannungs-Gleichstrom-Coulomb-Effekt einer vorbestimmten verstärkten Spannung reagiert und, sobald sie kontaminiert ist, die Anzahl der negativen Ionen in einer Innenraumatmosphäre auf die Anzahl der negativen Ionen stabilisiert wird, die normalerweise in einer reichlich begrünten Vorstadt anzutreffen ist.

4. Umwelt-Dekontaminationssystem mit luftreinigender und deodorisierender Wirkung gemäß Anspruch 1, bei dem der Sensor für die Ozonkonzentration unmittelbar hinter dem Auslaß des Systems angeordnet ist und die Leistung der Ozongenerierung steuert, um eine Ozonabluftkonzentration aufrechtzuerhalten in Höhe von weniger als 0,06 ppm, welches als Sicherheitsstandard für die Systemabluft festgelegt worden ist, auch wenn der Ozongenerator, der ozondeodorisierende Katalysator und der Säuregasabsorber sekularen Änderungen unterworfen sind.

5. Umwelt-Dekontaminationssystem mit luftreinigender und deodorisierender Wirkung gemäß Anspruch 1, bei dem die Lebensdauer des Katalysators verlängert wird, indem die Generierung von Ozon in einem Temperaturbereich verringert wird, indem biologische Gerüche in einem Lebensraum von Menschen nicht signifikant aktiviert werden.

6. Umwelt-Dekontaminationssystem mit luftreinigender und deodorisierender Wirkung gemäß Anspruch 1, bei dem eine Fehlfunktion des Sensors für die Ozonkonzentration aufgrund gemischter Gase vermieden wird, indem der Staubsammerl, das chemische Deodorant und der Säuregasabsorber als Schutzfilter für den Ozonsensor fungieren.

## Revendications

1. Système de décontamination de l'environnement ayant des fonctions de purification et de désodorisation de l'air, comprenant :
un bâti ayant une entrée d'air et une sortie d'air, ledit bâti renfermant :
un collecteur de poussières à courant continu haute tension ayant l'effet de Coulomb,
un générateur d'ozone ayant une couche diélectrique formée d'une céramique fine,
un catalyseur de désodorisation d'ozone,
un absorbant de gaz acides, et
un ventilateur de balayage par aspiration,
qui sont disposés du côté entrée d'air au côté sortie d'air, et
un capteur de concentration d'ozone située de façon adjacente à ladite sortie d'air, la concentration d'ozone en phase gazeuse qui est émis par le ventilateur de balayage étant contrôlée par ledit capteur de concentration d'ozone, moyennant quoi le débit de sortie d'ozone est contrôlé au moyen d'une unité de contrôle.

2. Système de décontamination de l'environnement ayant des fonctions de purification et de désodorisation de l'air selon la revendication 1, dans lequel la concentration d'ozone émis est maintenue de façon contrôlée à un taux inférieur à 0,06 ppm, qui a été prédéfini comme une norme sûre pour l'émission de gaz.

3. Système de décontamination de l'environnement ayant des fonctions de purification et de désodorisation de l'air selon la revendication 1, ledit système étant construit de façon à répondre rapidement à une variation de la charge de poussières collectées pour la fumée de cigarettes ou analogue, avec un effet de Coulomb à courant continu haute tension, à une tension amplifiée prédéterminée, et, après la décontamination, le nombre d'ions négatifs dans un environnement en intérieur est stabilisé par rapport au nombre d'ions négatifs qu'on observe habituellement dans des banlieues très vertes.

4. Système de décontamination de l'environnement ayant des fonctions de purification et de désodorisation de l'air selon la revendication 1, dans lequel le capteur de concentration d'ozone est placé directement à l'arrière de la sortie du système et maîtrise la sortie d'ozone produit de telle façon que la concentration de l'ozone sortant soit maintenue à un taux inférieur à 0,06 ppm, qui a été prédéterminé comme une norme sûre pour la sortie du système, même si le générateur d'ozone, le catalyseur de désodorisation d'ozone et l'absorbant de gaz acides sont sujets à des variations séculaires.

5. Système de décontamination de l'environnement ayant des fonctions de purification et de désodorisation de l'air selon la revendication 1, dans lequel on prolonge la vie utile du catalyseur en ralentissant la formation d'ozone dans une plage de température où les odeurs biologiques ne sont pas activées de façon significative dans un espace où vivent des êtres humains.

6. Système de décontamination de l'environnement ayant des fonctions de purification et de désodorisation de l'air selon la revendication 1, dans lequel un fonctionnement erroné du capteur de concentration d'ozone, qui serait dû à des gaz divers, est empêché grâce à l'agencement du collecteur de poussières, du désodorisant chimique et de l'absorbant de gaz acides sous la forme de filtres protégeant le capteur d'ozone.
